# EUROPEAN PATENT APPLICATION

(11) **EP 1 023 954 A1**
(43) Date of publication of application: **02.08.2000**
(21) Application number: 99830046.1
(22) Date of filing: 29.01.1999
(51) Int. Cl.: B21D 43/20, B23Q 7/10

(54) **Installation for working sheet metal**

(71) Applicant: RAINER S.r.l., I-40012 Calderara di Reno (Bologna) (IT)
(72) Inventor: Raimondi, Stefano, 40133 Bologna (IT)
(74) Representative: Eccetto, Mauro

(57) **Abstract**

The installation (1) comprises a machine tool (3) provided with a work unit (4), a work plane (5), and a carriage (6) for moving a metal sheet (2) to and from the work unit (4), and a storage unit (9) for storing metal sheets (2). The storage unit (9) comprises a main store (7) with shelves (8) in which pallets (11) are housed each containing a plurality of metal sheets (2), a transit store (13) having shelves (14) in which it is possible to house respective pallets (11), and a device (15) for transferring pallets (11) from the main store (7) to the transit store (13) and vice versa. The installation (1) further includes a device (17) for transferring one metal sheet (2) at a time from a pallet (11) positioned in the transit store (13) to the work plane (5) and vice versa.

## Description

The present invention relates to an installation for working sheet metal.

As is known, prior art installations for working sheet metal comprise a machine tool, a store of metal sheets and a device operable to collect the metal sheets to be worked from the store and to transfer them to the machine tool, and to collect the worked metal sheets from the machine tool and to transfer them back to the store.

The main disadvantage of the above-described installation lies in the extended times that it takes in working the metal sheets; these extended times being due to the fact that during the transfer of the metal sheets from the store to the machine tool and vice versa the machine tool remains idle.

The object of the present invention is that of providing an installation for working metal sheets which will be free from the above-stated disadvantages.

According to the present invention there is provided an installation for working metal sheets, comprising a machine tool having a work unit, a working plane, and a carriage for moving a metal sheet over the said working plane to and from the said work unit, and a storage unit for storing a plurality of said metal sheets, characterised in that the said storage unit comprises a first main store having a plurality of shelves one above the other for housing pallets each of which contains at least one of the said metal sheets, a transit store for the said pallets having a least two shelves on which it is possible to house respective said pallets, and a first pallet transfer device for transferring pallets from the said first main store to the said transit store and vice versa, and in that it includes a second device for transferring one said metal sheet at a time from one said pallet positioned in the said transit store to the said work plane.

The present invention will now be described with reference to the attached drawings which illustrate a non-limitative embodiment thereof, in which:
Figure 1 is a plan view of an installation formed according to the principles of the present invention;
Figure 2 is a front view, with parts removed, of the installation of Figure 1;
Figures 3 and 4 are respectively front and plan views of a component of the installation of Figure 1;
Figure 5 is a side view on a reduced scale of the components of Figure 4; and
Figure 6 is a view of a transfer member of the installation of Figure 1.

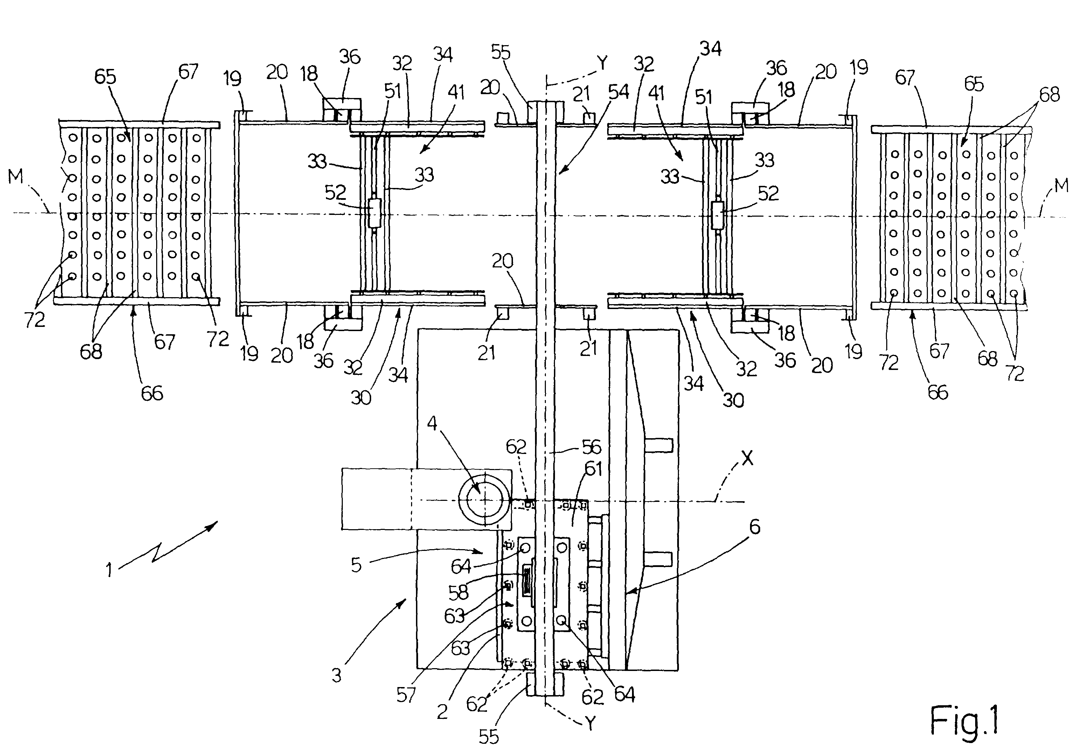

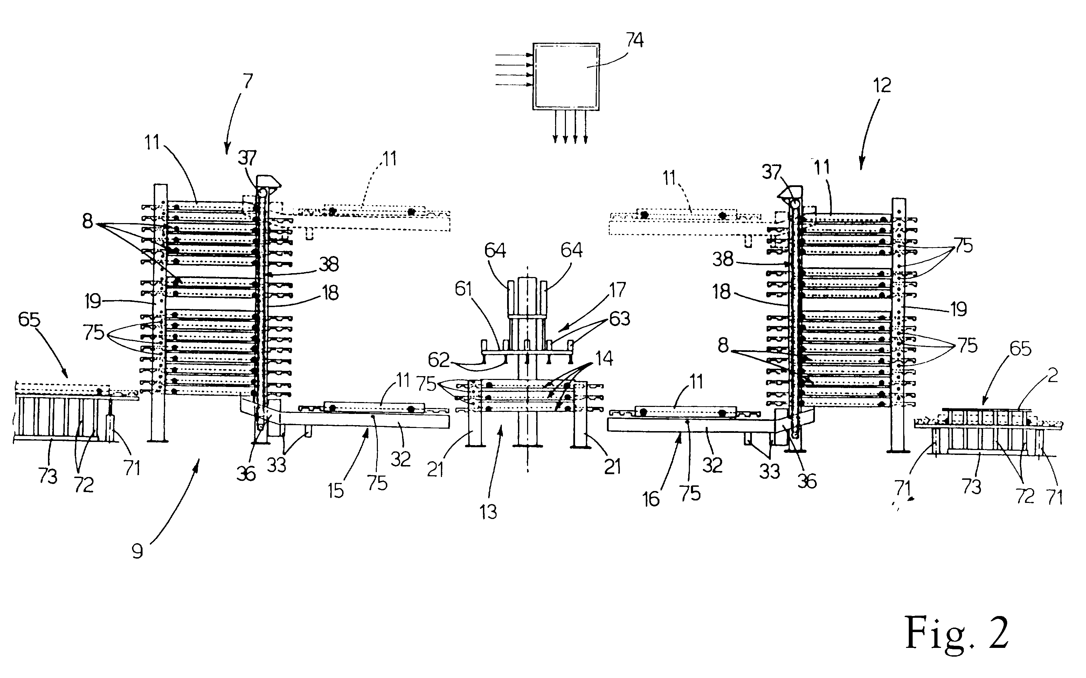

With reference to Figures 1 and 2, an installation for working metal sheets 2 is generally indicated 1, and comprises a machine tool 3 provided with a work unit 4, a work plane 5, and a carriage 6 for moving the metal sheet 2 over the work plane 5 to and from the work unit 4 along two horizontal orthogonal axes X and Y, of which the axis Y is the longitudinal axis of the machine 3. The installation 1 includes a storage unit 9 for storing the metal sheets 2; the storage unit 9 having a longitudinal plane which extends along the horizontal axis M parallel to the axis X. In plan the installation 1 has a generally T-shape in that the edge of the machine 3 parallel to the axis X is close to the central part of the edge of the unit 9 parallel to the axis M. Unit 9 includes a first main store 7 or the vertical type in that it has a plurality of shelves 8 one above the other. On the shelves 8 are housed pallets 11 each of which contains a plurality of metal sheets 2. The unit 9 further includes a second main store 12 entirely similar to the store 7 and facing this latter.

With reference to Figures 1 and 2, the unit 9 includes a transit store 13 for pallets 11; this store 13 being similar to the main stores 7 and 12. The store 13 is positioned along the axis M between the two stores 7 and 12, is of vertical type and has less height in that it has only three shelves 14 on which it is possible to house respective pallets 11. The unit 9 finally includes a device 15 for transferring pallets 11 along the axis M from the store 7 to the store 13 and vice versa, and a device 16 (similar to the device 15) for transferring pallets 1 along the axis M from the store 12 to the storel3 and vice versa. The installation 1 further includes a device 17 for transferring a metal sheet 2 one at a time along the axis Y from a pallet 11 positioned in the store 13 to the work plane 5 and vice versa.

With reference to Figures 1 and 2, the main stores 7 and 12 comprise four vertical columns of which those indicated 18 face towards the store 13 and those indicated 19 are on the opposite side. Each shelf 8 is constituted by two horizontal rails 20 parallel to the axis M and carried by columns 18 and 19. In particular, for each shelf 8 a first rail 20 is carried by a first column 18 and a first column 19, and the second rail of 20 is carried by the second column 18 and the second column 19. The store 13 includes four vertical columns 21 two in line with the first column 18 and the first column 19 of both stores 7 and 12 and two in line with the second column 18 and the second column 19 of the stores 7 and 12. The shelves 14 of the store 13 are similar to the shelves 8 of the stores 7 and 12 in that these two are constituted by two horizontal rails 20 carried by columns 21 and in line with the rails 20 of the stores 7 and 12.

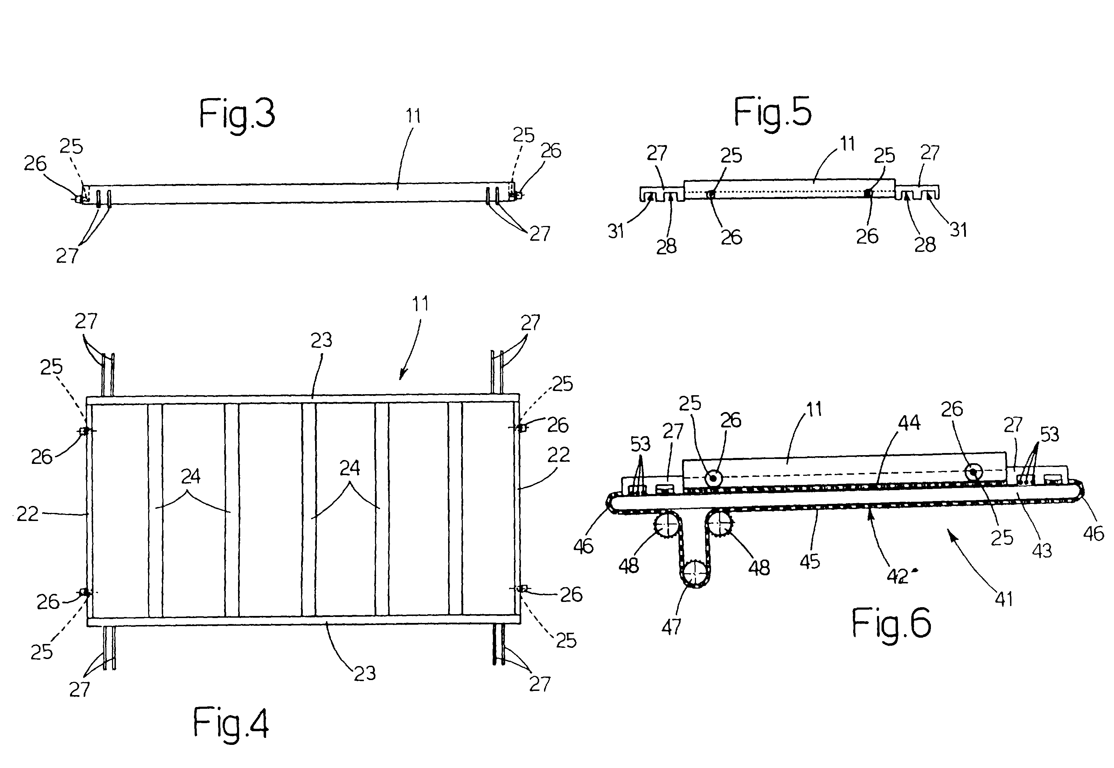

With reference to Figures 3, 4 and 5 each pallet 11 is of box-like form and has four sides which lie in respective vertical planes and which are parallel to one another in pairs. Two parallel pairs, indicated 22 are lateral sides and two parallel sides, indicated 23, are respectively front and rear sides depending on which the store houses this pallet 11. Moreover, the pallet 1 includes a plurality of horizontal rails 24 which connect the sides 23 and which support the metal sheet 2. From the outer face of both the sides 22 extend two respective horizontal pins 25 on which is freely rotatably mounted a respective roller 26. Each pallet 11 rests by means or the rollers 26 on the rails 20 of the corresponding shelves 8 or 14. From the above-described form of the stores 7, 12 and 13 and the pallets 11 it will be evident that the pallets 11 can enter and leave the stores 7, 12 and 13 from the front part and the rear part of these latter and can slide along the shelves 8 and 14.

With references to Figures 3, 4 and 5, two pairs of parallel arms 27 extend from each side 23 parallel to the axis M. The arms 27 lie in respective vertical planes and along their lower edge have 2 notches 28 and 31; the notch 28 being that closest to the side 23. For each side 23 the notches 28 of both pairs of arms 27 are aligned and the notches 31 are likewise aligned. Moreover, the arms 27 extend beyond the space enclosed by the column 18 and 19 and in particular the notches 28 of the arms 29 extending from the front edge 23 are outside the said space enclosed between the columns 18.

With reference to Figure 1 and 2, the device 15 comprises a frame 30 for supporting the pallet 11. The frame 30 comprises two horizontal bars 32 parallel to one another and parallel to the axis M; the distance between these bars 32 being less than the distance between the rails 20 of the store 7. The two bars 32 are fixed together by means of two horizontal connecting beams 33. Moreover, along the outer edge each bar 32 carries a rail 34 in line with a corresponding rail 20. The device 15 further includes a system 35 for the movement of the frame 30 along the vertical axis to carry this frame 30 from a lower position to a load/unload position in which the frame 30 is at the same level as one of the shelves 8 and vice versa. The system 35 includes U-shaped bodies 36 fitted to the respective column 18 which serve as guides for the translation of the corresponding body 36, a motor 37, and a chain mechanism 38 operable to transmit drive from the motor 37 to the bodies 36; the frame 30 being fixed to the bodies 36. It is emphasised that the length of the bars 36 is such as to span the distance between the columns 18 of the store 7 and the nearest columns 21 of the store 13; in particular a first axial end of the bars 32 being substantially close to the corresponding column 18 and the second axial end of the bars 32 being substantially adjacent the just-mentioned corresponding column 21.

With reference to Figures 1 and 6, the device 15 finally includes a system 41 for collecting a pallet 11 from the store 7 and which allows this pallet 11 to be transferred first to the frame 30 and subsequently into the store 13. The system 41 further allows the pallet 11 to be collected from the store 13 then to transfer it into the store 7. The system 41 comprises, for each bar 32, a respective chain 42 supported by a plate 43 carried by the bar 32 within the space defined between the bars 32; the plate 43 lies in the vertical plane. The chain 42 has an upper rectilinear section 44 parallel to the axis M and which slides on an edge of the plate 43, a lower section 44 comprising a rectilinear part which slides along an edge of the plate 43, and two connecting portions 46 between the sections 44 and 45 which slide on a respective axial edge at the end of the plate 43, which edge describes a circumferencial arc. The first section 46 is near to the said first end of the bar 32 and the second section 46 is near to the said second end of the bar 32; in substance the section 44 has the same length as the bar 32.

With reference to Figure 6, a lower part 45 of the section is 'U'-shape in that it meshes with a toothed wheel 47 and on it are fitted two belt tensioner toothed wheels 48. The wheel 47 associated with a bar 32 is mounted for rotation with the wheel 47 of the second bar 32 of the device 15 by means of a transmission shaft 51 which receives rotary drive from an electric motor 52; in particular the wheels 47 are fitted to the shaft 51 and this has its longitudinal axis horizontal and orthogonal to the axis M.

Each chain 42 supports two sets each of 3 horizontal pins 53 which extend from both sides of the chain 42 itself; a first set of three pins 53 is disposed in a first region of the chain 42 and a second set of three pins 53 is disposed in a second region of the chain 42. The said two regions of the chain 42 are spaced from on another by a length equal to the distance between the notch 28 of the front side 23 and the notch 31 of the rear side 23 of the same pallet 11. The width of the chain 42 is less than width of the space enclosed within a pair of arms 27, whilst the three pins 53 of each set have a length greater than the distance between the tabs 27 of a pair. Moreover the distance between the first and last pin 53 of the same set is less than the length of the notches 28 and 31. The device 16 is entirely similar to the device 15 and therefore its component parts are indicated with the same reference numericals utilised to indicate the component parts of the device 15.

With reference to Figure 1 and 2, the device 17 comprises a portal 54 having two vertical columns 55 and a cross beam 56 which connects the upper ends of the column 55. The cross-beam 56 is defined along a horizontal axis which lies in the same vertical plane in which the axis Y lies, whilst the columns 55 are disposed one at the longitudinal end of the machine 3 opposite the unit 9 and the other at the edge, parallel to the axis M, of the unit 9 opposite the machine 3. The device 17 further comprises a pick-up member 57 of the sucker type supported by the cross-beam 56 and means 58 for motorising the member 57 along the beam 56. The member 57 is of known type and comprises a plate 61 supporting plurality of suckers 62, means 63 for actuating the suckers to perform a pick-up function and a function in which they release the metal sheet 2, and means 64 for moving the plate 61 along a vertical axis between a lower pick-up position and an upper transfer position of the metal sheet 2 from the store 13 to the working plane 5 and vice versa.

With reference to Figures 1 and 2 the installation 1 finally comprises 2 loading/unloading stations 65 for loading/unloading one pallet 11 at a time from the store 7 and one from the store 12. The station 65 are installed on the side of the stores 7 and 12 delimited by the columns 19. Each station 65 comprises a support frame 66 for a pallet 11; the frame 66 comprises two parallel bars 67 parallel to the axis M and a plurality of rails 68 connecting the bars 67. The rollers 26 of the supported pallet 11 rest on the upper face of the bars 67. Station 65 further comprises means 71 for translation of the frame 66 between a lower position and a position corresponding to one of the shelves 8; these means 71 being preferably constituted by fluid dynamic actuators as illustrated in Figure 2. The said lower position assumed by the frame 66 is at a level lower than that of the shelf 8 closest to the floor. The station 65 further comprises a plurality of vertical pins 72 which extend vertically upwardly from a plate 73 positioned on the floor. The pins 72 have the same length and in particular their upper end is close to the level of the shelf 8 closest to the floor. The position of the pins 72 is such as not to interfere with the rails 68 of the frame 66 and with the rails 24 of the pallet 11.

With reference to Figure 1, the installation 1 finally comprises an electronic central control unit 74 which manages the operation of all the members, devices and systems which form part of the installation 1. Moreover, the central control unit 74 is able to recognise, via a series of sensors 75, which shelves 8 and 14 of the three stores 7, 12 and 13 house the pallet 11, to recognise the shelves 8 and 14 of the three stores 7, 12 and 13 which are currently empty, to recognise which pallets 11 are in transit and the position of these along the unit 9, to recognise the unit 11 with metal sheets to be worked, and the pallets 11 with metal sheets 2 which have already been worked, and to calculate how many metal sheets 2 each pallet 11 contains.

The operation of the installation 1 is as follows.

Supposing that the store 7 houses on all its shelves 8 pallets 11 in each of which is positioned a plurality of metal sheets 2 to be worked, the device 15 is able to take a pallet 11 from one of the shelves 8 and to transfer this pallet 11 to the store 13. In particular, the central control unit 74 after having identified the pallet 11 to pick up and the corresponding shelf 8, controls the device 15 in such a way that frame 3 is carried to the same level as shelf 8 which has been selected. Once this level has been achieved the system 41 is controlled in such a way as to activate the movements of the chain 42 (in a clockwise sense as seen in Figure 6). As illustrated in Figure 2 each chain 42 is located in the space enclosed by the arms 27 of a corresponding pair of arms 27. For a position assumed by the pallet 11 in the shelf 8 movement of the chain 8 involves, in correspondence with the section 46 close to the store 7, the engagement of a first set of pins 53 in the notch 28. Upon continuing the movement of the chain 42 the first set of pins 53 draws the pallet 1 out from the shelf 8 which slides by means of the rollers 26 on the frame 30. Still continuing the movement of the chains 42 the second set of pins 53, again in correspondence with the section 46 close to the store 7, engage the notch 31 at the rear side 23 of the pallet 11.

When the pallet 11 is entirely on the frame 30 the movement of the chains 32 is first stopped and subsequently the frame 30 is translated up to a level corresponding with a predetermined shelf 14 of the store 13. Now it is possible to continue the movement of the chains 42 in such a way as to transfer the pallet 11 from the frame 30 to the preselected shelf 14. During this transfer, and in correspondence with the section 46 close to the store 13, first the first set of pins 53 and then the second set of pins 53 disengage from the notch 28 and the notch 31 respectively. Now the pallet 11 is entirely housed in the shelf 14 of the store 13.

At this point the device 17 withdraws a metal sheet 2 from the said pallet 11 to transfer it to the working plane 5 where it is carried by the carriage 6 which moves it towards the work unit 4 which performs the programmed operation on it. During the working phases performed in the machine 3 the device 15 withdraws from the store 13 the pallet 11 with the metal sheet to be worked and transfers into the store 13 an empty pallet taken from the store 7. Once the work on the metal sheet 2 has been finished in the machine 3 this, now worked, metal sheet is taken up by the device 17 which deposits it onto the empty pallet 11. Subsequently the device 15 takes the pallet 11 with the now worked metal sheet 2 to transfer it either into a shelf 14 lower than the preceding one or into a shelf 8 of the store 7. Finally the device 15 carries the pallet 11 with a metal sheet 2 to be worked onto a shelf 14 accessible by a device 17 for a new withdrawal of a metal sheet to be worked and for transfer of this to the machine 3. Once a pallet 11 is filled with already worked metal sheets 2 this pallet 11 is transferred to a shelf 8, a new pallet 11 with metal sheet 2 to be worked is taken from shelf 8 and the empty pallet 11 is utilised to receive the metal sheets 2 as they are worked. The same operations described above relating to the store 7 and the device 15 can be repeated in relation to the store 12 and the device 16.

It is evident that the unit 9 being provided with three stores 7, 12 and 13 having several shelves 8 and 14 and two devices 15 and 16 for picking up and transferring pallets 11, can provide a large plurality of combinations for supply of the store 13 with pallets 11 having metal sheets 2 to be worked, and for temporarily withdrawing these pallets 11. In particular it is possible to house on the highest shelf 14 a pallet 11 with metal sheets 2 to be worked, and to house the pallet 11 which is to receive the metal sheet 2, after it has been worked, on the underlying shelf 14. Then, during working of the metal sheet 2 in the machine 3, it is possible that one of the two devices 15 and 16 temporarily withdraws the pallet 11 with metal sheets 2 to be worked in such a way as to allow the deposit of the already-worked metal sheet 2 in the other pallet 11. Subsequently the pallet 11 with the metal sheet 2 to be worked returns into the above-mentioned shelf 14 in such a way as to allow a metal sheet 2 to be worked to be picked up for transfer to the machine 3.

Naturally, the operations just described can be performed for example by releasing the pallet 11 with the metal sheets 2 to be worked in the second shelf 14 and temporarily transferring the pallet 11 with the already-worked metal sheet 2 into the highest shelf 14 only upon occasion of the deposit into it of the metal sheet 2 output from the machine 3. A different mode of operation could involve the use of one of the devices 15, 16 as temporary housing either for the pallet 11 with metal sheets 2 to be worked or the pallet 11 with already-worked metal sheets 2. It is to be underlined that it is possible to utilise the store 13 and the devices 15 and 16 to transfer pallets 11 from the store 7 to the store 12 and vice versa.

It is emphasised that the pallets 11 with already-worked metal sheets 2 can be transferred into the store 7 and 12 and from theses in correspondence with the stations 65 exchanged with pallets 11 with yet-to-be-worked metal sheets 2. In particular, via the means 71 it is possible to carry the frame 66 to the same level as a shelf 8 in such a way as to be able to extract a pallet 11 from this shelf 8 or to be able to insert a pallet 11 into this shelf 8. Once a pallet 11 with an already-worked metal sheet 2 is transferred onto the frame 66, again via the means 71 it is possible to carry the frame 66 above the said lower position. Given the length of the pins 72 and given that the frame 66 is at the said lower position, the pins 72 project beyond the frame 66 so that the metal sheet 2 remains resting on the upper ends of the pins 72. It is thus possible for an operator to empty the station 65 of already-worked metal sheets 2 very easily. Naturally, with the same ease it is possible to load metal sheets 2 for working. The removal and introduction of the pallet 11 from the shelf 8 is achieved manually in the constructional arrangement of the unit 9 illustrated here; however, it is evident that these operations can be also performed by means of devices entirely similar to the devices 15 and 16 described above. Finally, it is to be noted that the machine 3 could be provided with its own discharge station 4 for already-worked metal sheets separate from the store 13 and therefore the stores 7 and 12 could be utilised only for the supply of yet-to-be-worked metal sheets 2.

From the above description it is evident that numerous advantages can be achieved with the embodiments of the present invention.

In particular the installation 1 comprises a unit 9 which automatically manages the transfer operation of already-worked and yet-to-be-worked metal sheets 2. Then, by utilising the very capacious stores 7 and 12 the installation 1 can be operated even with reduced personal, these being allocated possibly to the loading and unloading of the pallets 11 from the said stores 7 and 12. Moreover, the structure and operation of the unit 9 makes it possible to reduce the dead times of the machine 3. In fact, during working on a metal sheet 2 the unit 9 prepares a pallet 11 in a position ready for acceptance of the said metal sheet 2 once the working on it is finished. Then, if the already-worked metal sheet 2 is discharged from the machine 3 to a discharge station separate from the store 13, the dead times of the machine 3 are entirely nullified in that the unit 9 is utilised exclusively for supplying the machine 3 with metal sheet 2 to be worked and the machine 3 does not have to do anything except take up metal sheets 2 and work them. All this involves a significant reduction in costs of working the metal sheets.

Finally, it is clear that the installation 1 described and illustrated here can have modifications and variations introduced thereto without by this departing from the ambit of the present invention.

## Claims

1. An installation for working metal sheets comprising a machine tool (3) provided with a working unit (4), a work plane (5), and a carriage (6) for moving a metal sheet (2) over the said work plane (5) to and from the said work unit (4), and a storage unit (9) for a plurality of the said metal sheets (2), characterised in that the said unit (9) comprises a first main store (7) having a plurality of shelves (8) one above the other for housing pallets (11) each of which contains at least one of the said metal sheets (2), a transit store (13) for the pallet (11) having at least two shelves (14) in which it is possible to house respective said pallets (11), and a first transfer device (15) for transferring a said pallet (11) from the said first main store (7) to the said transit store (13) and vice versa, and in that it includes a second transfer device (17) for transferring the said metal sheets (2) one at a time from the said pallet (11) positioned in the said transit sore (13) to the said work plane (5).

2. An installation according to claim 1, characterised in that the said first transfer device (15) comprises a support frame (30) for a pallet (11), a first system (35) for movement of the said frame (30) along a vertical axis to bring the said frame (30) from a lower position to a loading/unloading position in which the said frame (30) is at the same level as one of the said shelves (8) of the said first main store (7), and vice versa, and a second system (41) for taking a pallet (11) from the said first main store (7) in such a way as to transfer this pallet (11) first onto the said frame (30) and subsequently into the said transit store (13); the said second system (41) also being able to take the said pallet (11) from the said transit store (13) to then transfer it into the said first main store (7).

3. A system according to claim 2, characterised in that the said pallet (11) is of box-like form and has four sides in parallel pairs and a plurality of first rails (24) for support of the said metal sheets (2); two first parallel lateral sides (22) support rollers (26) for sliding of the said pallet (11) along the said shelves (8 and 14) along the said frame (30), two second parallel front and rear sides (33) from each of which extend two pairs of parallel arms (27) each having two adjacent notches (28 and 30).

4. An installation according to claim 3, characterised in that the said second system (41) includes two chains (42) supported by the said frame (30) and engaging with a respective toothed wheel (47) which receives rotary drive from an electric motor (52); the said chain (42) having a width less than the distance between the said arms (27) of the pair of arms (27) in such a way as to span the space enclosed between the said pair of arms (27), each of the said chains (42) supporting at separate regions at least one respective pin (53) engageable in one of the said notches (28 and 31) of the said arms (27).

5. An installation according to claim 4, characterised in that the distance between the said regions of the said chains (42) at which this supports the said pins (43) is substantially equal to the distance between a first (28) of the said notches (28 and 31) of the said arms (27) which project from the said front second side (23) and the second (31) of the said notches (28 and 31) of the said arms (27) which extend from the said rear second side (23).

6. An installation according to any preceding claim, characterised in that the said first main store (7) comprises four vertical columns (18 and 19) and in that each of the said shelves (8) of the said first main store (7) is constituted by two second horizontal rails (20) supported by the said columns (18 and 19) and on which the said rollers (26) engage.

7. An installation according to any preceding claim characterised in that the said transit store (13) comprises four vertical columns (21) and in that each of the said shelves (13) of the said transit store (13) is constituted by two third horizontal rails (20) supported by the said columns (18 and 19) and on which the said rollers (26) engage.

8. An installation according to any preceding claim, characterised in that it includes a second main store (12) similar to the said first main store (7), a second device (16) similar to the said first device (15) for transfer of the said pallets (11) from the said second main store (13) to the said transit store (13) and vice versa.

9. An installation according to claim 8, characterised in that its comprises for each of the said main stores (7 and 12) a respective loading and unloading station (65) for the said pallets (11).

10. In installation according to any preceding claim characterised in that it includes an electronic central control unit (74) which manages the operation of all the members, devices and systems forming the said installation; the said central control unit (74) being able to recognise, via a series of sensors (75), which of the said shelves (8 and 14) of the said stores (7,12 and 13) houses a said pallet (11), which of the said shelves (8 and 14) are empty at present, which of the said pallets (11) are in transit, and the position of these along the said unit (9), which of the said pallets (11) houses yet-to-be-worked metal sheets (2) and which of the said pallet (11) houses already-worked metal sheets (2), and to calculate how many metal sheets (2) each of the said pallets (11) contains.
